# EUROPEAN PATENT SPECIFICATION

(11) **EP 1 268 235 B1**
(45) Date of publication and mention of the grant of the patent: **01.08.2007**
(21) Application number: 01922591.1
(22) Date of filing: 22.03.2001
(51) Int. Cl.: B60N 2/20

(54) **A MULTI-POSITIONABLE AND REVERSIBLE SEAT ASSEMBLY**
MEHRFACH POSITIONIERBARE UND UMKEHRBARE SITZEINRICHTUNG
FAUTEUIL REVERSIBLE A PLUSIEURS POSITIONS

(30) Priority: 22.03.2000 US 191712 P
(43) Date of publication of application: 02.01.2003
(73) Proprietor: Magna Seating Systems Inc., Aurora, Ontario L4G 7K1 (CA)
(72) Inventor: TAME, Omar, D., West Bloomfield, MI 48324 (US)
(74) Representative: Hössle Kudlek & Partner
(86) International application number: PCT/US2001/009297
(87) International publication number: WO 2001/070537

(56) References cited:
- CH-A- 287 456
- DE-A- 4 336 710
- FR-A- 1 009 600
- GB-A- 318 676
- GB-A- 699 609
- US-A- 4 081 051
- US-A- 5 076 640
- US-A- 5 362 124

## Description

### 1. Field of the Invention

The present invention relates generally to a seat assembly, and more particularly, to a multi-positionable and reversible seat assembly for an automotive vehicle.

### 2. Description of the Related Art

Automotive vehicles commonly include front and rear driver side and passenger side seat assemblies for supporting occupants within the vehicle. The seat assemblies may include one or more bucket-type seat assemblies, elongated bench-type seat assemblies, or a combination of each, aligned in one or more rows within the interior compartment of the vehicle. Each seat assembly typically includes a generally horizontal seat cushion and a generally upright seat back coupled to the seat cushion for supporting the seat occupant in an upright seating position. The seat back is commonly pivotally coupled to the seat cushion by a recliner mechanism for providing pivotal movement of the seat back between a plurality of inclined positions relative to the seat cushion. For example, sport utility vehicles and/or mini-vans often include rear seat assemblies wherein the seat back is pivotal about the seat cushion from an upright seating position to a plurality of forwardly and rearwardly inclined positions. That is, the seat back may pivot rearwardly from the upright position to an inclined, or reclined, position and often pivot approximately 90 degrees to a generally flat bed-type position. The seat back may also pivot forwardly from the upright position to a folded, or dumped, position against the seat cushion for providing additional storage space within the vehicle compartment or to allow access behind the seat assembly.

Automotive vehicles, such as full-size vans, also commonly include rear seat assemblies mounted to the floor of the vehicle by a swivel pedestal for allowing the seat assembly to swivel, or rotate, about its vertical axis from a conventional forward facing position to a rearward facing position. For example, the vehicle may include both a second and third row of seat assemblies behind the front driver and passenger seat assemblies wherein the second row of seat assemblies are rotatable from the conventional forward facing position to a rearward facing position facing toward the third row of seat assemblies.

GB 699609 A discloses a seat assembly according to the preamble of claim 1.

It remains desirable to provide a multi-positionable and reversible seat assembly wherein the seat cushion remains fixedly secured to the floor of the vehicle and the seat back is positionable, or reversible, between upright forward and rearward facing seating positions. It is also desirable to provide a multi-positionable and reversible seat assembly wherein the seat back is also positionable between generally horizontal forward and rearward facing bed positions. It is also desirable to provide a seat assembly that is easily convertible between any of the desired reversible and multi-positions.

### SUMMARY OF THE INVENTION

The present invention includes a multi-positionable and reversible seat assembly comprising a pair of spaced apart seat risers adapted for mounting the seat assembly to a vehicle floor. The seat risers include a forward end and an opposite rearward end. The seat assembly further includes a seat cushion operatively coupled between the seat risers and pivotal between a first inclined position against the forward end and a second inclined position against the rearward end of the risers. The seat assembly also includes a seat back operatively coupled to the seat risers and pivotal between a first upright position adjacent the forward end and a second upright position adjacent the rearward end of the risers. The seat assembly includes a linkage mechanism interconnecting the seat risers to each of the seat cushion and the seat back for pivoting the seat cushion between the first inclined position and the second inclined position in response to the seat back pivoting between the first upright position and the second upright position.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a side view of a seat assembly shown in a variety of positions;
Figure 2 is a perspective view of the seat assembly in a forward facing and upright seating position;
Figure 3 is partially broken perspective view of the seat assembly of Figure 2;
Figure 4 is a perspective view of the seat assembly in a rearward facing and upright seating position;
Figure 5 is a partially broken front view of a linkage mechanism between the seat back and seat cushion of the seat assembly;
Figure 6 is a partially broken front view of a latch mechanism for locking the seat assembly in each of the upright seating positions;
Figure 7 is a front view of the seat assembly;
Figure 8 is a partially broken perspective view of the linkage mechanism and latch mechanism with the seat assembly in an upright seating position;
Figure 9 is a partially broken perspective view of the linkage mechanism and latch mechanism with the seat assembly released from the upright seating position;
Figure 10 is another partially broken perspective view of the linkage mechanism and latch mechanism with the seat assembly released from the upright seating position;
Figure 11 is still another partially broken perspective view of the linkage mechanism and latch mechanism with the seat assembly released from the upright seating position;
Figure 12 is a partially broken perspective view of the seat assembly with the seat back midway between the forward facing and rearward facing upright seating positions;
Figure 13 is a partially broken perspective view of the seat assembly in the rearward facing and upright seating position;
Figure 14 is a partially broken perspective view of the seat assembly in a forward facing bed position;
Figure 15 is a partially broken side view of the seat assembly in the forward facing bed position;
Figure 16 is a perspective view of the seat assembly in the forward facing bed position;
Figure 17 is a perspective view of the seat assembly in a rearward facing bed position;
Figure 18 is a partially broken perspective view of an inner suspension support structure of the seat back;
Figure 19 is a side view of the inner suspension support structure of the seat back;
Figure 20 is a perspective view of a bench type multi-positionable and reversible seat assembly in a forward facing and upright seating position;
Figure 21 is a partially broken perspective view of the seat back and inner suspension support of the bench type seat assembly of Figure 20; and
Figure 22 is a partially broken perspective view of the inner suspension support of Figure 21.

### DETAILED DESCRIPTION OF THE PREFERRED EMBODIMENT

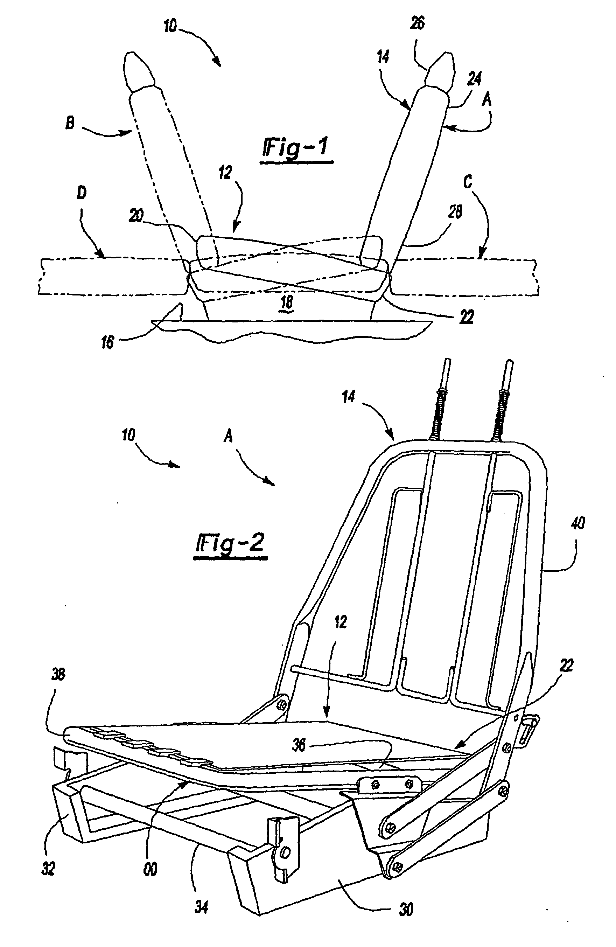

Referring to Figure 1, a multi-positionable and reversible seat assembly according to the subject invention is generally shown at 10 for use in an automotive vehicle. The seat assembly 10 includes a seat cushion 12 and a seat back 14 operatively coupled to the seat cushion 12. The seat cushion 12 is supported above the floor of the vehicle, depicted at 16, by a riser 18. The seat assembly 10 may include a bucket-type seat, a bench-type seat, or a split-type seat, such as a 60/40 seat, as is commonly known to one skilled in the art, without varying from the scope of the invention. The seat cushion 12 includes a front portion 20 and an opposite rear portion 22. The seat back 14 includes an upper portion 24 for supporting a head restraint 26 and an opposite lower portion 28 positioned adjacent seat cushion 12.

Figure 1 discloses the seat assembly 10 in a plurality of seat positions. First, the seat assembly 10 is shown in a forward facing and upright seating position at A. "Forward facing" is defined as the seat cushion 12 and seat back 14 positioned to support a seat occupant in a direction facing toward the front of the vehicle, as is commonly known. With the seat assembly 10 in the forward facing and upright seating position A, the seat cushion 12 is inclined such that the front portion 20 is spaced further from the vehicle floor 16 than the rear portion 22. Additionally, the seat back 14 is in a generally upright position with the lower portion 28 immediately adjacent the rear portion 22 of the seat cushion 12. Second, the seat assembly 10 is also shown in a rearward facing and upright seating position at B. Conversely, "rearward facing" is defined as the seat cushion 12 and seat back 14 positioned to support a seat occupant in a direction facing toward the rear of the vehicle. With the seat assembly 10 in the rearward facing and upright seating position B, the seat cushion 12 is inclined such that the rear portion 22 is spaced further from the vehicle floor 16 than the front portion 20. Additionally, the seat back 14 is still in a generally upright position, however, the lower portion 28 is now immediately adjacent the front portion 20 of the seat cushion 12. Third, the seat assembly 10 is further shown in a first flat bed position at C. In the first flat bed position C, the seat cushion 12 is positioned generally planar and parallel to the vehicle floor 16. The seat back 14 is reclined from the forward facing and upright seating position to a generally horizontal position extending rearwardly from the rear portion 22 of the seat cushion 12 and generally planar and parallel to both the seat cushion 12 and the vehicle floor 16. Finally, the seat assembly 10 is additionally shown in a second flat bed position at D. In the second flat bed position D, the seat cushion 12 is again positioned generally planar and parallel to the vehicle floor 16. However, the seat back 14 is reclined from the rearward facing and upright seating position to a generally horizontal position extending forwardly from the front portion 20 of the seat cushion 12 and generally planar and parallel to both the seat cushion 12 and the vehicle floor 16.

The seat assembly 10 is therefore, multi-positionable, or reversible, from any one of the positions A-D to any other one of the positions A-D, as will be described in further detail hereinbelow. That is, the seat assembly 10 may be positioned from the forward facing and upright seating position A directly to the rearward facing and upright position B, the first bed position C or the second bed position D. The same is applicable from any of the other positions A-D. It should be appreciated that the seat assembly 10 may also be secured to the vehicle floor 16 in a position other than forward facing and rearward facing. That is, the seat assembly 10 may be positioned in the vehicle transverse or angled with respect to the front and rear of the vehicle to allow side-to-side reversible positioning of the seat assembly 10 in each of the positions A-D. Referring to Figure 2, the seat assembly 10 is shown in the forward facing and upright position A. The seat assembly 10 includes an inboard riser 30 and an outboard riser 32 for fixedly securing and supporting the seat assembly 10 to the vehicle floor 16. The inboard riser 30 is typically adjacent the driver side of the vehicle and the outboard riser 32 is typically adjacent or toward the passenger side of the vehicle. The inboard 30 and outboard 32 risers are parallel, spaced apart and interconnected by cross support bars 34, 36 adjacent the respective front portion 20 and rear portion 22 of the seat cushion 12. The seat cushion 12 includes a tubular and generally rectangular seat cushion support frame 38. The seat back 14 similarly includes a tubular and generally U-shaped seat back support frame 40. The seat cushion support frame 38 and the seat back support frame 40 are each operatively connected to the risers 30, 32 as will be further described below.

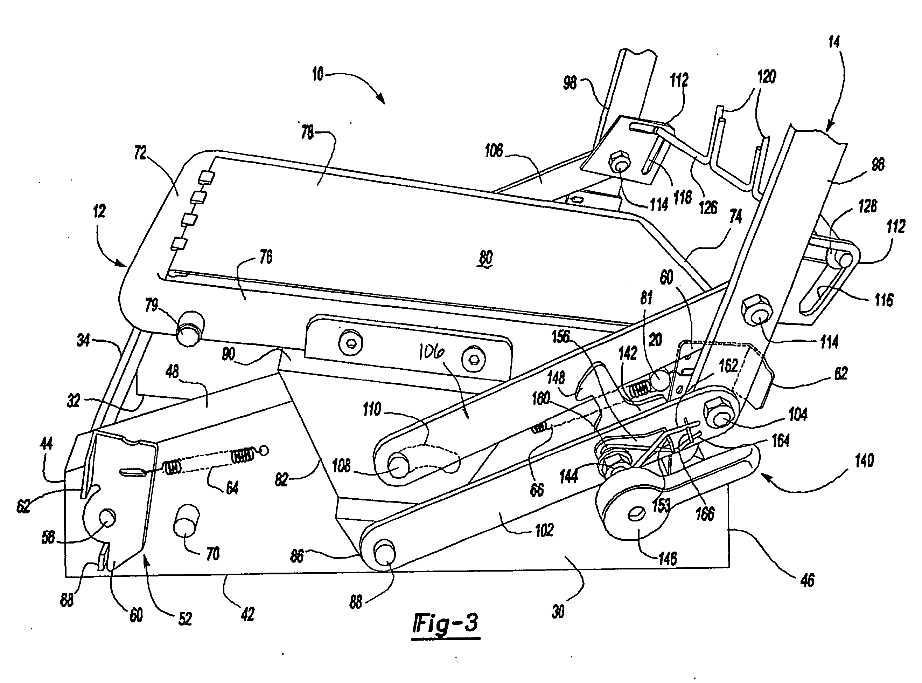

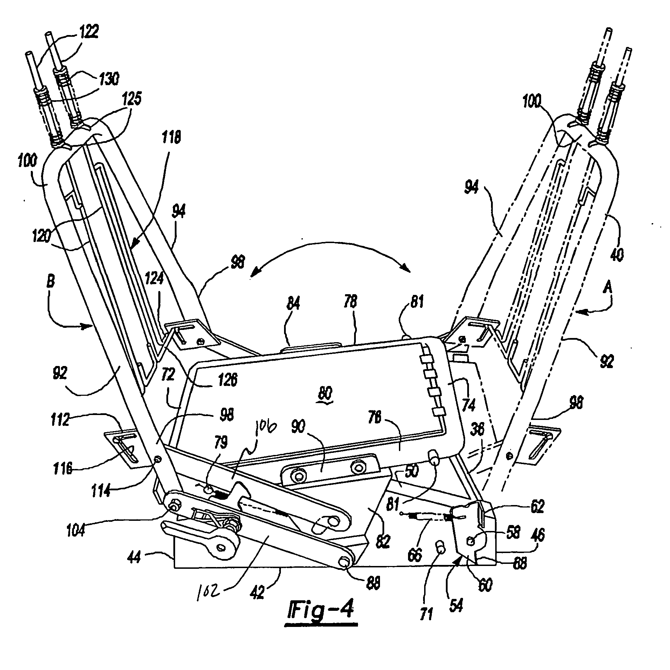

Referring to Figures 3 and 4, the inboard 30 and outboard 32 risers each include a bottom surface 42 extending between a forward end 44 and a rearward end 46. The bottom surface 42 of each riser 30, 32 is adapted to be fixedly mounted to the floor 16 of the vehicle such as by bolts. Each riser 30, 32 also includes opposing upper inclined surfaces 48, 50 extending from the respective ends 44, 46 to a center peak therebetween. A pair of seat cushion supports 52, 54 are mounted to each of the risers 30, 32 between the ends 44, 46. More specifically, a seat cushion support 52 is pivotally secured by pivot pin 56 to each riser 30, 32 adjacent the forward end 44 and between the bottom surface 42 and the inclined surface 48. Similarly, a seat cushion support 54 is pivotally secured by pivot pin 58 to each riser 30, 32 adjacent the rearward end 46 and between the bottom surface 42 and the inclined surface 50. The seat cushion supports 52, 54 are generally L-shaped shaped having a main plate 60 pivotally secured to the riser 30, 32 and a push plate 62 extending outwardly from the main plate 60. A return spring 64 is connected between the main plate 60 of the seat cushion support 52 and the riser 30, 32 for biasing the seat cushion support 52 in the clockwise direction. Similarly, a return spring 66 is connected between the main plate 60 of the seat cushion support 54 and the riser 30, 32 for biasing the seat cushion support 54 in the counterclockwise direction. A nub 68 protrudes outwardly from the outer surface of the risers 30, 32 below and adjacent each seat cushion support 52, 54 for abutting with the lower portion of the main plate 60 and limiting the rotation in the respective clockwise and counterclockwise directions about the pivot pins 56, 58. Each riser 30, 32 further includes a pair of cylindrical locking pins 70, 71 projecting outwardly from the outer surface of each riser 30. The locking pin 70 is mounted adjacent the seat cushion support 52, below the return spring 64. Similarly, the locking pin 71 is mounted adjacent the seat cushion support 54, below the return spring 66. The purpose of the locking pins 70, 71 will be discussed hereinbelow.

Still referring to Figures 3 and 4, the seat cushion support frame 38 includes a front tube 72 adjacent the cross support bar 34 and a rear tube 74 adjacent the cross support bar 36. A pair of spaced apart inboard and outboard tubes 76, 78, interconnect the front tube 72 and rear tube 74. The seat cushion 12 further includes a suspension mat 80 fixedly secured and supported between the front tube 72 and rear tube 74 of the seat cushion support frame 38. The suspension mat 80 is a planar mat of interwoven, resilient material providing flexibility and resilient support to the occupant supported on the seat cushion 12. The seat cushion support frame 38 also includes a pair of cylindrical support posts 79, 81 projecting outwardly from each of the inboard 76 and outboard 78 tubes. The support posts 79 on the inboard 76 and outboard 78 tubes are positioned adjacent the front tube 72. The support posts 81 on the inboard 76 and outboard 78 tubes are position adjacent the rear tube 74.

The seat cushion 12 further includes a first and second triangular shaped hinge plates 82, 84 for securing the seat cushion support frame 38 to the inboard and outboard risers 30, 32. The first hinge plate 82 is fixedly secured to the inboard tube 76 and the second hinge plate 84 is fixedly secured to the outboard tube 78 by bolts, welds, or the like. Each hinge plate 82, 84 includes a lower apex 86 for receiving a main pivot rod 88 therethrough and pivotally mounting the hinge plates 82, 84 to the respective risers 30, 32. More specifically, the pivot rod 88 extends between and through the spaced apart risers 30, 32 to support the hinge plates 82, 84 and provide pivotal movement of the hinge plates 82, 84, and therefore the seat cushion support frame 38 about the risers 30, 32. Each of the hinge plates 82, 84 further include an upper support shelf 90 positioned immediately above the inclined surfaces 48, 50 of the risers 30, 32. The upper support shelf 90 positions and supports the seat cushion support frame 38 on one of the inclined surfaces 48 or 50 of the risers 30, 32, or therebetween, depending on the position of the seat assembly 10, as will be further discussed.

Referring to Figure 4, the seat back support frame 40 of the seat back support frame 40 further includes an inboard tube 92 and an outboard tube 94 operatively connected to the seat cushion 12. Each of the inboard 92 and outboard 94 tubes include an upper end 96 and a lower distal end 98. The upper ends 96 are interconnected by an upper cross tube 100 and the lower distal ends 98 are operatively connected to the seat cushion 12. The seat back support frame 40 is operatively connected to the seat cushion 12 by a four bar linkage mechanism 101. For simplicity, the inboard side of the seat assembly 10 shown in Figures 3 and Figure 4 will be described. It should be understood and appreciated that the outboard side of the seat assembly is substantially identical to the inboard side unless otherwise indicated. Specifically, referring to Figure 3, an elongated lower link 102 extends between each of the lower distal ends 98 of the respective inboard 92 and outboard 94 tubes to the lower apex 86 of the respective hinge plate 82, 84. The lower link 102 includes a first end pivotally coupled by a pivot pin 104 to the lower distal end 98 of the respective inboard 92 and outboard 94 tubes. The lower link 102 also includes an opposite second end pivotally coupled by the pivot rod 88 to the lower apex 86 of the hinge plates 84, 86. The lower link 102 provides pivotal movement of the seat back support frame 40 about the pivot rod 88 from the forward facing and upright position A to the rearward facing and upright position B as shown in Figure 4.

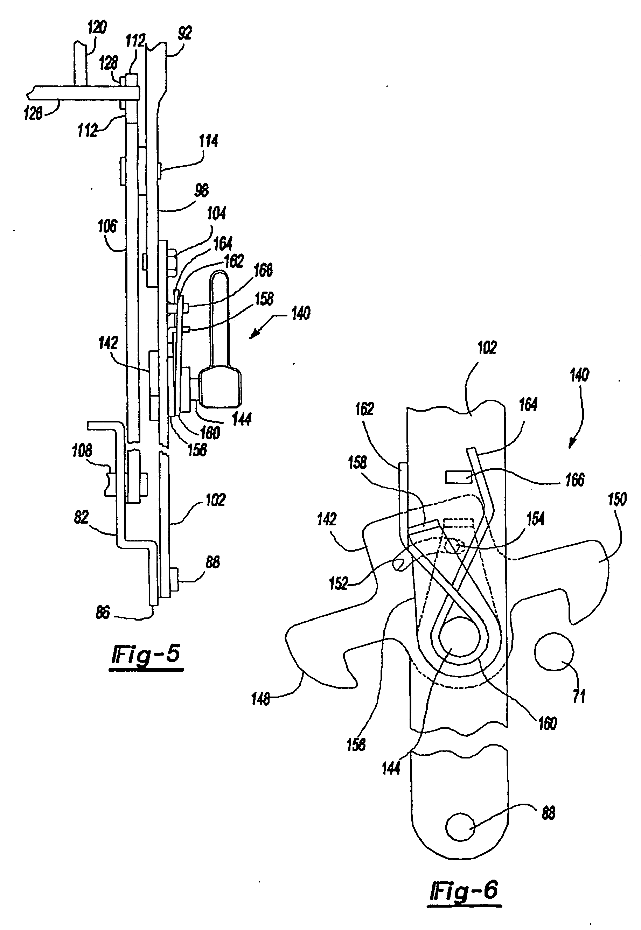

An elongated upper link 106 also extends between each of the lower distal ends 98 of the respective inboard 92 and outboard 94 tubes to the respective hinge plates 82, 84. The upper link 106 includes a first end pivotally coupled to the respective hinge plates 84, 86 between the lower apex 86 and the upper support shelf 90. The first ends of the upper links 106 are pivotally coupled to the hinge plates 84, 86 by an elongated, cylindrical pivot rod 108, which extends between the hinge plates 84, 86 and risers 30, 32. More specifically, one end of the pivot rod 108 extends through a bore in the hinge plate 84 and through an arcuate-shaped slot 110 in the inboard riser 30. The opposite end of the pivot rod 108 similarly extends through an arcuate-shaped slot in the outboard riser 32 and through a bore in the hinge plate 86. The first ends of each of the upper links 106 are secured to the respective ends of the pivot rod 108 adjacent the hinge plates 84, 86. The upper link 106 further includes a second distal end forming a bulbous, or diamond, shaped portion 112. The lower distal ends 98 of the inboard 92 and outboard 94 tubes are pivotally connected to the upper link 106 by a pivot pin 114 adjacent the bulbous portion 112. That is, the pivot pin 114 pivotally connects the lower distal end 98 to the upper link 106 between the bulbous portion 112 and the first end, or pivot rod 108. Therefore, as shown in Figure 4, the bulbous portion 112 of the upper link 106 extends beyond the inboard 92 and outboard 94 tubes when the seat back 14 is in the forward facing and upright position A and the rearward facing and upright position B. Additionally, the lower distal ends 98 of the inboard 92 and outboard 94 tubes are at least partially positioned, or sandwiched, between the lower link 102 and the upper link 106 with the pivot pin 104 of the lower link 102 spaced below the pivot pin 114 of the upper link 106. The bulbous portion 112 of the upper link 106 includes a V-shaped slot 116 therethrough. The V-shaped slot 116 is arranged in the bulbous portion 112 with the point of the V-shape adjacent the second distal end of the upper link 106 and opening, or extending, with the V-shape facing toward the first end of the upper link 106. Figure 5 is a front view of the lower end 98 of the inboard tube 92 positioned between the lower link 102 and the upper link 106. Figure 5 also depicts the pivotal connections between the upper 106 and lower 102 links and the hinge plate 82 as well as the pivotal connections between the inboard tube 92 and the links 102, 106.

Referring to Figures 3 and 4, the seat back 14 further includes an inner suspension support frame 118 operatively connected between the seat back support frame 40 and the upper link 106. The inner suspension support frame 118 includes a pair of spaced apart, elongated and cylindrical support bars 120 extending parallel with the inboard 92 and outboard 94 tubes between first ends 122 and second ends 124. The first ends 122 extend through bores in the upper cross tube100 and project above the upper cross tube 100 to receive and mount the head restraint 26 to the seat back 14 in a conventional manner. The bores in the upper cross tube 100 are further defined by elongated slots 125 for slidably receiving the ends 122 of the support bars 120 to allow the ends 122 to pivot forward or rearward with respect to the upper cross tube 100 as will be further described below. The second ends 124 are connected to an elongated, cylindrical cross bar 126 which is generally perpendicular to the support bars 120 and extends between the inboard 92 and outboard 94 tubes. The cross bar 126 includes opposite distal ends that are received and guided within the V-shaped slots 116 in the bulbous portion 112 of the respective upper links 106. A locking ring 128 is secured to the distal ends of the cross bar 126 to retain the ends in the V-shaped slots 116. The inner suspension support frame 118 further includes a pair of coil springs 130 seated around the respective support bars 120 and secured between the first ends 122 and the upper cross tube 100. The coil springs 130 are secured in compression to bias the inner suspension support frame 118 toward the upper cross tube 100 and the bias the opposing distal ends of the cross bar 126 toward the point of the V-shaped slot 116.

Referring to Figures 3 and 6, the seat assembly 10 further includes a latch mechanism 140 for releasably locking the seat assembly 10 in each of the positions A-D as shown in Figure 1. The latch mechanism 140 includes a latch plate 142 pivotally connected to the lower link 102 by a pivot shaft 144. The pivot shaft 144 extends through an aperture in the lower link 102 from a first end to a second end. The latch plate 142 is fixedly secured to the first end of the pivot shaft 144 and seated between the lower link 102 and the upper link 106, below the lower distal end 98 of the inboard tube 92 as shown in Figure 5. A latch handle 146 is fixedly secured to the second end of the pivot shaft 144 and extends outwardly and is spaced from the lower link 104 for rotating the shaft 144 and latch plate 142 in both the clockwise and counterclockwise directions. The latch plate 142 includes a forward hook 148 and a rearward hook 150 opposite the forward hook 148. That is, the forward hook 148 extends forward of the lower link 102 and the rearward hook 150 extends rearward of the lower link 102.

Referring to Figure 6, the latch plate 142 further includes an arcuate slot 152 passing through the plate 142 and extending between the forward hook 148 and the rearward hook 150. A guide pin 154 projects outwardly from the lower link 102 and is received within the slot 152 for limiting the rotational movement of the latch plate 142 in the clockwise and counterclockwise directions. A centering plate 156 is also fixedly secured to the pivot shaft 144 between the latch handle 146 and the lower link 102 for rotation therewith in each direction. The centering plate 156 includes a tab 158 projecting therefrom in the direction of the latch handle 146. A generally figure-eight shaped self centering spring 160 is coupled around the pivot shaft 144 for centering the latch plate 142. More specifically, the spring 160 is looped around the pivot shaft 144 and includes a first free end 162 biased against the tab 158 and a second free end 164 biased against a tab 166 projecting from the lower link 102. The self-centering spring 160 biases the latch plate 142 in a center position wherein the guide pin 154 is midway between the ends of the arcuate slot 152 and the hooks 148, 150 are extending an equal distance from the opposing sides of the lower link 102. The forward hook 148 is lockingly engagable with the locking pin 70 when the seat assembly 10 is in the rearward facing and upright seating position B and the second bed position D. Similarly, the rearward hook 150 is lockingly engagable with the locking pin 71 when the seat assembly is in the forward facing and upright seating position A and the first bed position C.

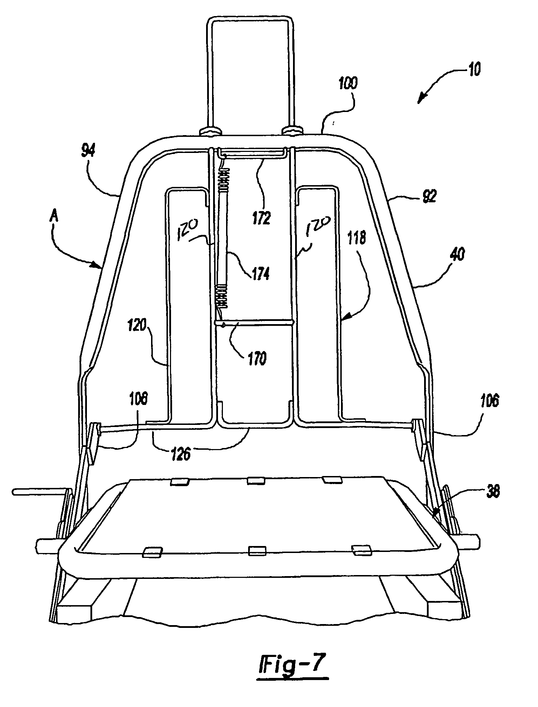

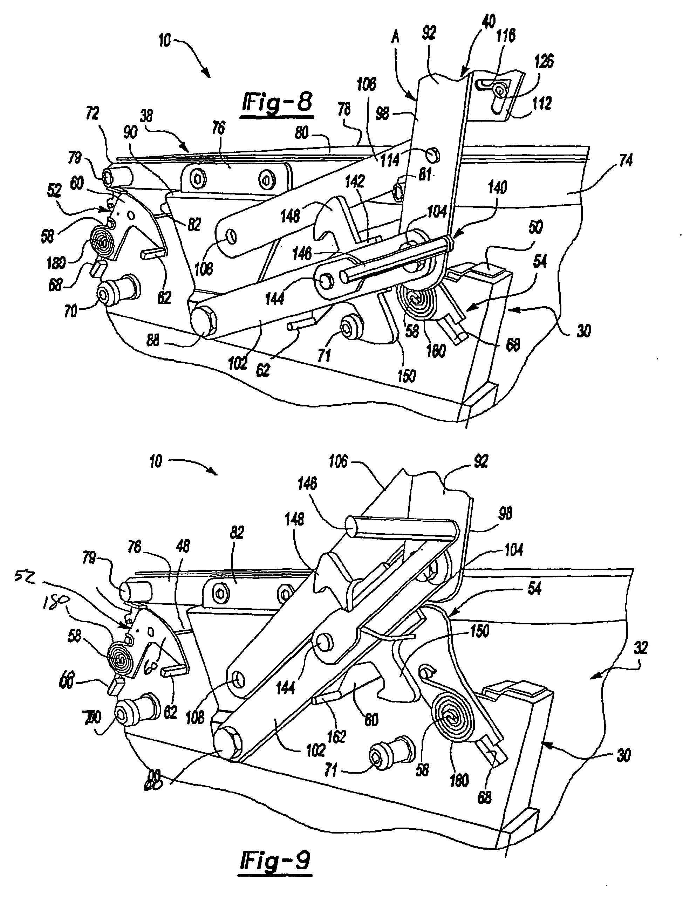

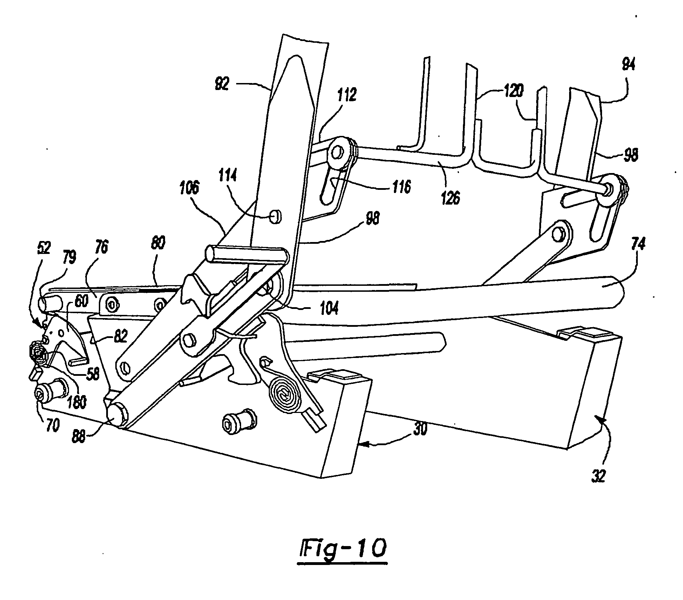

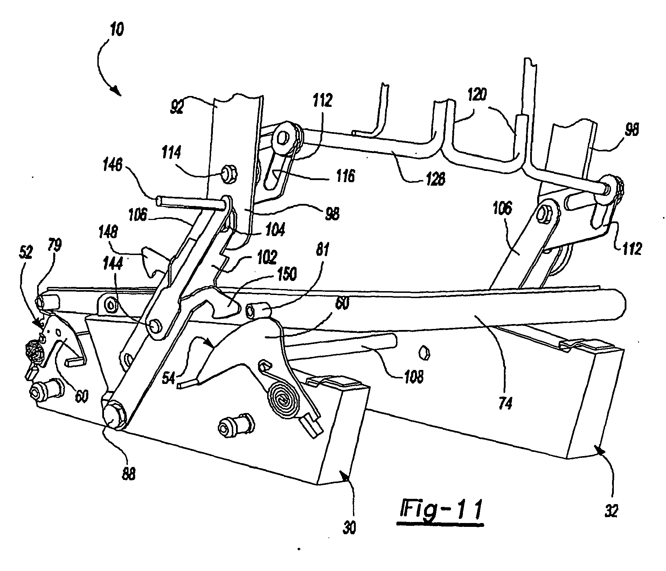

Referring to Figures 7-15, an alternative embodiment of the seat assembly 10 is shown. Figure 7 discloses an alternative arrangement of the inner suspension support frame 118 wherein the support bars 120 extend from the cross bar 126 to the first end extending through the upper cross tube 100. A first brace 170 interconnects the support bars 120 between the cross bar 126 and the upper cross tube 100. A second bracket 172 extends downwardly from the upper cross tube 100. A tension spring 174 is connected to and extends between the first brace 170 and the second brace 172 to bias the cross bar 126 toward the cross tube 100. That is, the tension spring 174 is an alternative to the coil springs 130 of Figure 4 which acts in tension on the inner suspension support frame 118 as opposed to acting in compression. Figures 8-15 discloses an alternative configuration of the seat cushion supports 52, 54. Specifically, the seat cushion supports 52, 54 are pivotally connected to the risers 30, 32 by pivot pins 56, 58, respectively. The seat cushion supports 52, 54 include a J-shaped main plate 60 having an outwardly projecting push plate 62 aligned for engagement by the lower link 102. The push plate 62 of Figures 3 and 4 is conversely aligned for engagement with the inboard 92 and outboard 94 tubes. Additionally, a coil spring 180 is secured between the pivot pin 56, 58 and the main plate 60 for biasing the seat cushion support 52 in the counterclockwise direction and the seat cushion support 54 in the clockwise direction. The main plate 60 still abuts with a nub 68 on the riser 30, 32 to limit the rotational movement of the seat cushion supports 52, 54.

In operation, and referring to Figures 3 and 4 and to Figures 7-15, the seat assembly 10 is multi-positionable and reversible between any of the positions A-D. First, the seat assembly 10 is shown in the forward facing and upright seating position A in Figures 7 and 8. In position A, the seat back support frame 40 is positioned adjacent the rear tube 74. The lower links 102 extend from the pivot rod 88 on the respective hinge plates 82, 84 to the pivot pins 104 on the lower distal ends 98 of the inboard 92 and outboard 94 tubes of the seat back support frame 40. The lower links 102 position the seat back support frame 40 such that the lower distal ends 98 are positioned adjacent the rear tube 74 of the seat cushion support frame 38 and extend upwardly therefrom to the upper cross tube 100. The upper links 106 extend from the opposing ends of the pivot rod 108 to the pivot pins 114 on the lower distal ends 98 of the inboard 92 and outboard 94 tubes of the seat back support frame 40. The bulbous portion 112 of the upper links 106 extends rearward of, or behind, the inboard 92 and outboard 94 tubes and supports the cross bar 126 of the inner suspension support frame 118 in the apex, or point, of the V-shaped slot 116. As shown in Figure 8, the upper link 106 is positioned above and parallel to the lower link 102 and extends between the hinge plates 82, 84 and the respective inboard 92 and outboard 94 tubes of the seat back support frame 40.

Additionally, the lower link 102 is engaged with the push plate 62 of the seat cushion supports 52, 54. The seat cushion supports 52, 54 are rotated in the clockwise direction about the respective pivot pins 58, away from the support posts 81, by engagement with the lower links 102 to prevent interference with the support posts on the seat cushion support frame 38. Alternatively, as shown in Figure 3, the lower distal ends 98 of the inboard 92 and outboard 94 tubes may engage the push plate 62 of the seat cushion supports 52, 54 to rotated the supports 52, 54 about the pivot pins 58 and away from the support posts 81.

The upper links 106 engage the support posts 81 projecting from the inboard 76 and outboard 78 tubes of the seat cushion support frame 38 to pivot the seat cushion support frame 38 about the pivot rod 88 toward the inclined surface 50 of the inboard 30 and outboard 32 risers. The upper support shelf 90 of each hinge plate 82, 84 is therefore supported on the inclined surfaces 50 of the inboard 30 and outboard 32 risers. Finally, the rearward hook 150 of the latch mechanism 140 is lockingly engaged with the locking pin 71 on the inboard riser 30 to retain both the seat cushion support frame 38 and the seat back support frame 40 of the seat assembly 10 in the forward facing and upright seating position A.

The seat assembly 10 is unlocked, or released, from position A by the latch mechanism 140. When the latch handle 146 is pivoted in the counterclockwise direction, the pivot shaft 144 is rotated about the lower link 102 to pivot the latch plate 142 and release the rearward hook 150 from the locking pin 71. The seat back support frame 40 is then free to pivot about the seat cushion support frame 38 via the upper 106 and lower 102 links. Specifically, if the latch handle 146 is pushed toward the forward end 44 of the risers 30, 32, the lower links 102 will be forced to pivot about the pivot rod 88. Since the upper link 106 is pivotally connected to the inboard 92 and outboard 94 tubes, the upper link 106 is also forced to pivot about the pivot rod 108. The links 102, 106, therefore pivot the seat back support frame 40 away from the rearward end 46 of the risers 30,32 as shown in Figures 9,10 and 11.

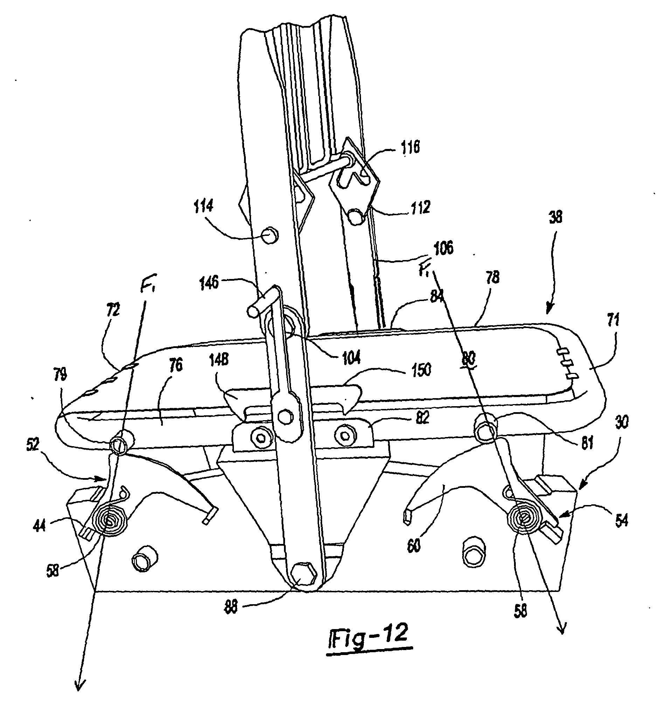

The coil springs 130, or alternatively the tension spring 174, of the seat back suspension frame 118 biases the support bars 120 and the cross bar 124 upwardly toward the upper cross tube 100. The cross bar 124, having its ends secured within the V-shaped slot of the bulbous portion 112, pulls upwardly on the end of the upper link 106. Since the end, or bulbous portion 112, of the upper link 106 extends behind the inboard and outboard tubes 92, 94, the springs 130 or 174 assist in pivoting the seat back support frame 40 about the hinge plates 82, 84. That is, with the upper link 106 extending behind the inboard and outboard tubes 92, 94, an angle is created between the tubes 92, 94 and the support bars 120. Since the upper link 106 is free to pivot about pivot pins 114 and 108, the springs 130 or 174 urge the seat back support frame 40 toward an upright position wherein the inboard and outboard tubes 92, 94 are aligned vertically with the upper and lower links 106, 102 as shown in Figure 12. In other words, the springs 130 or 174 assist in centering the seat back 14 between the front portion 20 and rear portion 22 of the seat cushion 12. The seat cushion frame 38 is also pivoted by the hinge plates 84, 86 about the pivot rod 88 from an inclined position supported against the inclined surface 50 to a generally horizontal position, as shown. Still referring to Figure 12, the seat cushion supports 52, 54 are biased against the nubs 68 and engaged by the respective support posts 79, 81 to support the seat cushion support frame 38 in the horizontal position. Since the seat cushion support frame 38 pivots about the rod 88, the seat cushion supports 52, 54 are aligned such that the line of force, shown in Figure 12 as F1, projects from the support posts 79, 81 through the pivot pins 56, 58, respectively, to prevent the seat cushion support frame 38 from pivoting in either direction.

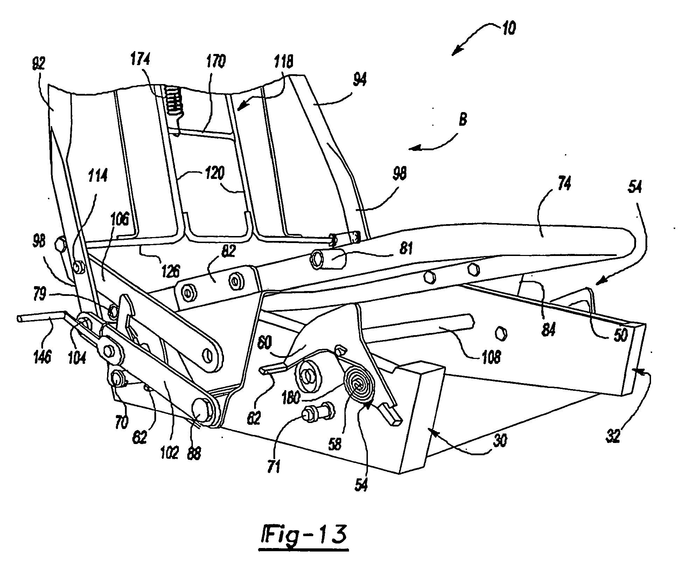

From the vertical position shown in Figure 12, the seat assembly 10 may be positioned to any of the multiple and reversible positions A-D as shown in Figure 1. For example, to position the seat assembly 10 in the rearward facing and upright seating position B, the latch handle 146 is continued toward the forward end 44 of the risers 30, 32. The inboard and outboard tubes 92, 94 will pivot the seat back support frame 40 about the pivot pins 104. The upper link 106 and lower link 102 lower the seat back support frame 40 toward the forward end 44 of the risers 30, 32 with the pivot pins 104 remaining spaced below the upper link 106. As the seat back support frame 40 approaches the seat cushion support 52, the lower link 102 engages the push plate 62 to rotate the support 52 clockwise about the pivot pin 56 releasing the main plate 60 from engagement with the support post 79. The seat cushion frame 38 may now pivot about the pivot rods 88 and 108 until the upper support shelf 90 of the hinge plates 82, 84 is seated and supported against the inclined surface 48 of the risers 30, 32. The outer surface of the forward hook 148 engages the locking pin 70 to rotate the latch plate 142 clockwise until the forward hook 148 passes the locking pin 70. The centering spring 160 returns the latch plate 142 to lockingly latch the forward hook 148 about the locking pin 70. Alternatively, although not shown, the latch plate 142 may be fixed to the lower link 102 and a pivotal locking pin 70 may be provide for camming engagement with the hooks 148, 150 until the hooks 148, 150 pass the locking pin 70 for positive engagement therewith. As shown in Figure 13, the seat assembly 10 is now locked in the rearward facing and upright seating position B which is reverse of the forward facing and upright seating position A.

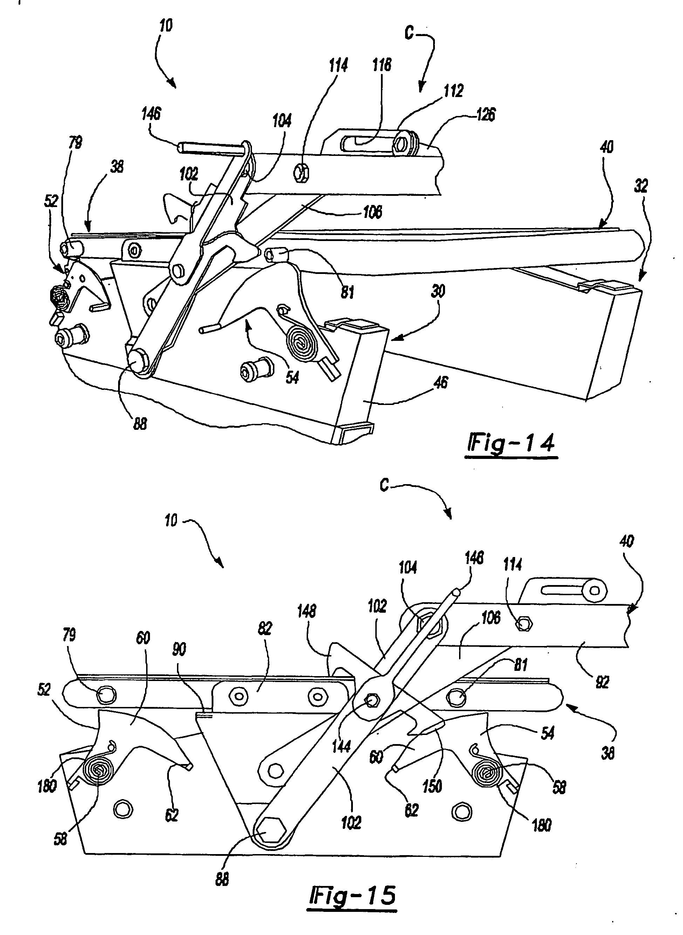

The seat assembly 10 may also be positioned to either of the first bed position C or the second bed position D. Referring again to Figure 12, with the seat back support frame 40 in the centered upright position as shown, the upper part of the seat back support frame 40, that is, the inboard or outboard tubes 92, 94 or the upper cross bar 100 may be moved in either direction towards the forward end 44 or rearward end 46 of the risers 30, 32. The force on the upper part of the seat back support frame 40 causes the inboard and outboard tubes 92, 94 to first pivot about the pivot pin 104 connected to the lower link 102 and then the pivot pin 114 connected to the upper link 106. The pivot pin 104 is elevated above the upper link 106 as the seat back support frame 40 is pivotally lowered toward the seat cushion support frame 38 as shown in Figures 14 and 15. The seat cushion support frame 38 is maintained in the horizontal position by the seat cushion supports 52, 54 engaged with the support posts 79, 81. The seat back support frame 40 is stopped in a generally horizontal position, planar and parallel to the seat cushion support frame 38 upon abutment between the upper link 106 with the support posts 81 as shown in Figure 15. The seat back support frame 40 is thus supported in the horizontal position by a triangulated support frame comprising the lower link 102 extending from the pivot rod 88 on the hinge plates 82, 84 to the pivot pins 104 on the inboard and outboard tubes 92, 94 in addition to the upper link 106 extending from the pivot rod 108 on the hinge plates 82, 84 to the pivot pin 114 on the inboard and outboard tubes 92, 94.

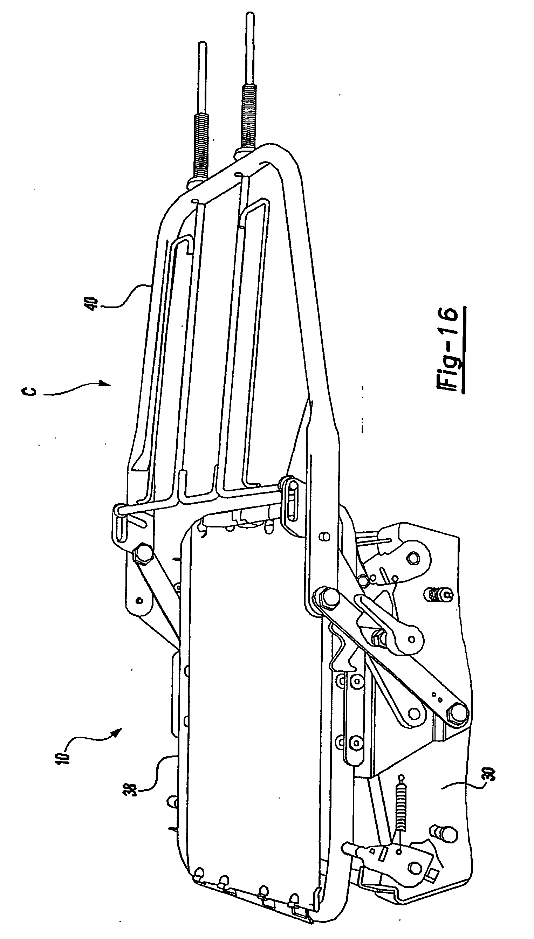

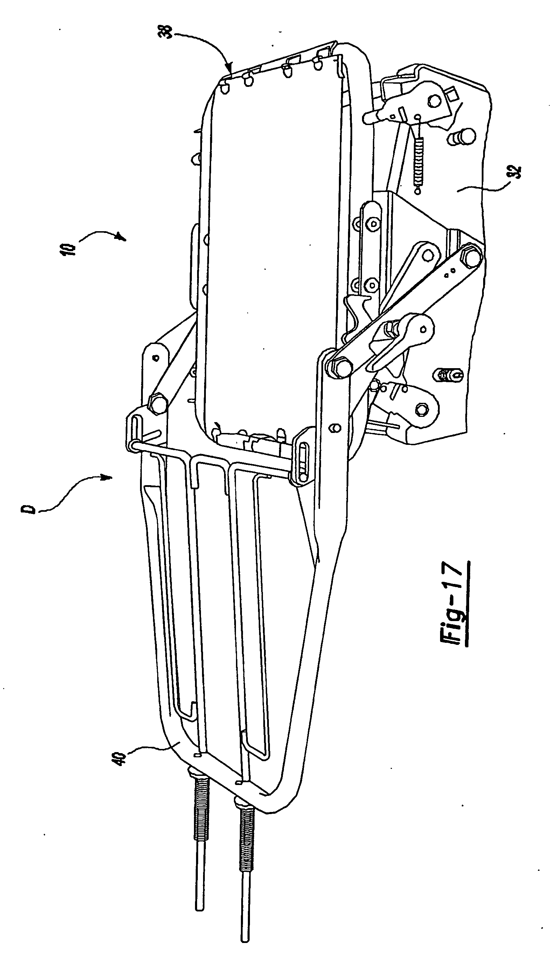

Referring to Figure 16, the embodiment of Figures 2-6 is shown in the first bed position C. Similarly, Figure 17 shows the embodiment of Figures 2-6 in the second bed position D, which is a reverse of the first bed position C.

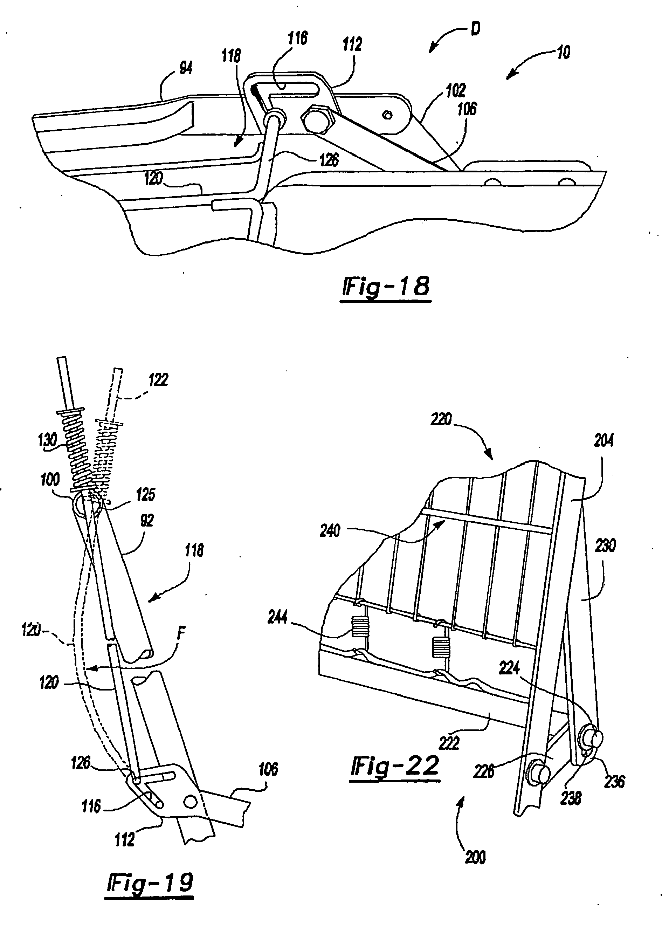

Referring to Figure 18, the inner suspension support frame 118 also provides additional suspension to the seat assembly 10 in the first bed position C and the second bed position D. Specifically, with the seat back support frame 40 supported by the support posts 79 or 81 in the horizontal position, the cross bar 126 of the inner suspension support frame 118 is free to slide downwardly from the point, or apex, of the V-shaped slot 116 in the upper link 106 to the end of the slot 116. The slot 116 is angled away from the horizontal position of the support bars 120 such that the sliding movement of the cross bar 126 in the slot 116 is pulling against the biasing force of the springs 130 or 174. Therefore, the cross bar 126 is still bias toward the point of the V-shaped slot 116 by the springs 130 or 174. The springs 130 or 174 thus provide a resilient suspension in the support bars 120 and cross bar 126 between the inboard and outboard tubes 92, 94 when the seat assembly is in the first bed position C or the second bed position D.

Referring to Figure 19, the inner suspension support frame 118 also provides an anti-whiplash mechanism when the seat assembly 10 is in either the forward facing and upright seating position A or the rearward facing and upright seating position B. Specifically, if a force F is exerted on the support bars 120 or cross bar 126, the bars 120 will deform rearward behind the inboard and outboard tubes 92, 94. The cross bar 126 is maintained in the V-shaped slots 116 of the upper links 106. The deformation of the bars 120 pulls the bars downwardly through the openings in the upper cross tube 100 against the force of the springs 130 or 174. The slots 125 in the cross tube 100 also allow the first ends 122 of the support bars 120 to pivot forwardly, or in the clockwise direction as shown in Figure 19, about the upper cross tube 100. Since the upper, or first ends 122, of the support bars 120 support the head restraint 26, the head restraint 26 will pivot toward the head of the seat occupant to reduce the distance between the occupants head and the head restraint and absorb energy from the impact force F.

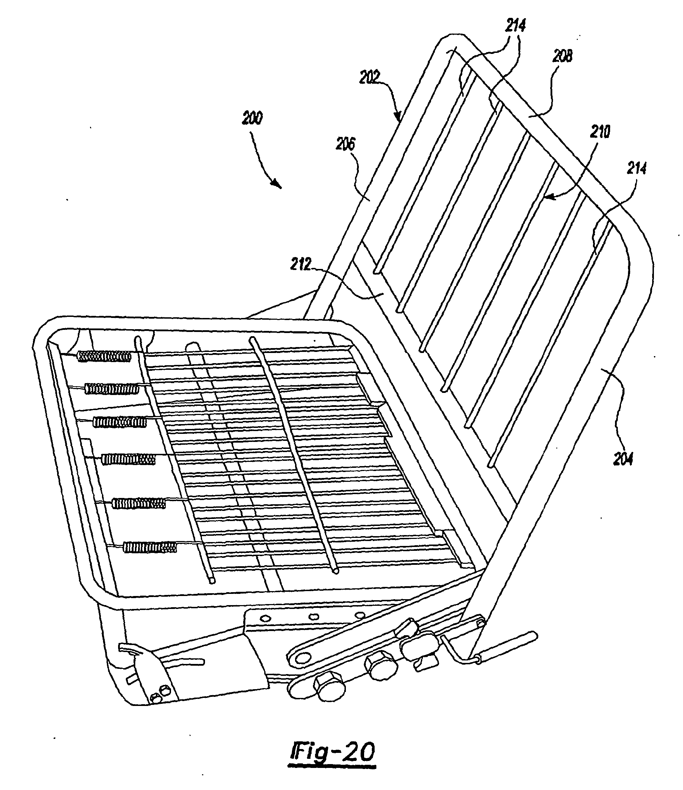

Figure 20 illustrates a bench-type seat assembly 200 that is also multi-positionable and reversible between the various positions A-D. The seat assembly 200 similarly includes a generally U-shaped seat back support frame 202 having inboard and outboard tubes 204, 206 and an upper cross tube 208. The seat back support frame 202, however, includes a fixed inner support frame 210. The inner support frame 210 includes cross bar 212 fixedly secured between the inboard and outboard tubes 204, 206. The inner support frame 210 also includes a plurality of elongated support bars 214 spaced apart between the inboard and outboard tubes 204, 206 and fixedly secured between the cross bar 212 and the upper cross tube 208. The seat back support frame 202 may be covered by a resilient cellular foam pad encased in a trim cover as conventionally known to one skilled in the art.

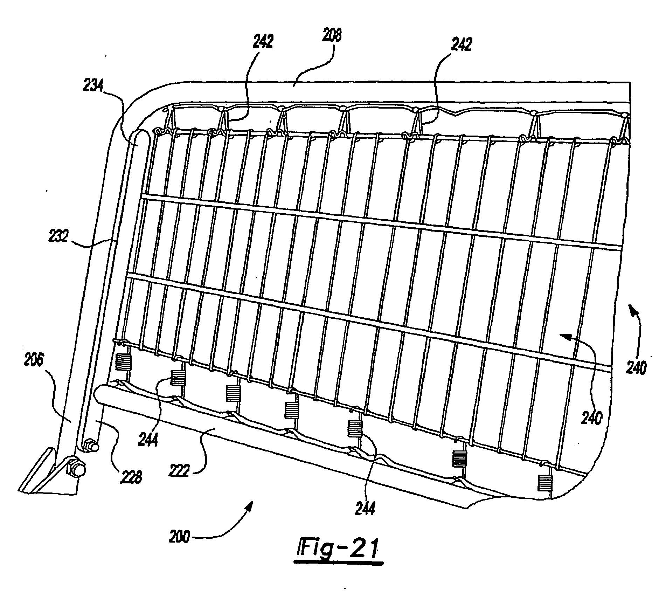

Figures 21 and 22 disclose an alternative inner support frame 220 for the bench-type seat assembly 200. The inner support frame 220 includes a cross bar 222 having first and second end and extending between the distal ends of the inboard tube 204 and the outboard tube 206. A pivot shaft 224 project axially outwardly from the ends of the cross bar 222. The inner support frame 220 further includes a pair of pivot links 226, 228. The pivot link 226 has a first end pivotally connected to the distal end of the inboard tube 204 and a second end pivotally coupled to the pivot shaft 224 on the end of the cross bar 222. The pivot link 228 similarly has a first end pivotally connected to the distal end of the outboard tube 206 and a second end pivotally coupled to the pivot shaft 224 on the opposite end of the cross bar 222. The inner support frame 220 also includes a pair of support links 230, 232 each having a first end 234 and a second end 236. The first ends 234 of the links 230, 232 are pivotally connected to the respective inboard and outboard tubes 204, 206 adjacent the upper cross tube 208. The second ends 236 include an elongated slot 238 for slidably receiving the pivot shaft 224 therethrough from the respective opposite ends of the cross bar 222. The inner support frame 220 also includes an inner suspension frame 240 comprising a plurality of interconnected wire rods commonly referred to in the art as "flexolator". The inner suspension frame 240 extends between the inboard and outboard tubes 204, 206 and between the upper cross tube 208 and the cross bar 222. The suspension frame 240 is coupled to the upper cross tube 208 by a plurality of looped hooks 242 to allow pivotal movement of the upper portion of the suspension frame 240. The lower portion of the suspension frame 240 is coupled to the cross bar 222 by a plurality of compression springs 244. The springs 244 bias the inner support frame 220 into planar alignment with the inboard and outboard tubes 204, 206 as shown in Figure 21. The inner support frame 220 provides a resilient and pivotal seat back suspension in the seat assembly 200. Specifically, in operation and as shown in Figure 22, when a seat occupant applies a load or force against the inner support frame 220, the pivot links 226, 228 allow the cross bar 222 to move rearward, or behind the inboard and outboard tubes 204, 206. The support links 230, 232 pivot about their first ends 234 and allow the pivot shafts 224 on the ends of the cross bar 22 to translate along the elongated slots 238 against the biasing force of the compression springs 244.

The invention has been described in an illustrative manner, and it is to be understood that the terminology, which has been used, is intended to be in the nature of words of description rather than of limitation.

Obviously, many modification and variations of the present invention are possible in light of the above teachings. It is, therefore, to be understood that within the scope of the appended claims, the invention may be practiced other than as specifically described.

## Claims

1. A multi-positionable and reversible seat assembly (10) comprising:
a pair of spaced apart seat risers (30, 32) adapted for mounting said seat assembly to a vehicle floor, said seat risers including a forward end (44) and an opposite rearward end (46);
a seat cushion (12) operatively coupled between said seat risers (30, 32) and pivotal between a first inclined position (A) against said rearward end and a second inclined position (B) against said forward end;
a seat back (14) operatively coupled to said seat risers and pivotal between a first upright position (A) adjacent said rearward end and a second upright position (B) adjacent said forward end;
a linkage mechanism (101) interconnecting said seat risers to each of said seat cushion and said seat back for pivoting said seat cushion between said first inclined position and said second inclined position in response to said seat back pivoting between said first upright position and said second upright position;
a hinge plate (82, 84) pivotally connected to each of said seat risers and fixedly secured to respective opposing sides of said seat cushion for guiding and supporting said seat cushion between each of said first and second inclined positions;
a first seat cushion support (52) pivotally mounted to each seat riser adjacent said forward end for engaging and supporting said seat cushion above said forward end (44) of said seat riser in said first inclined position (A) and disengaging said seat cushion for movement against said forward end of said seat riser in response to movement of said seat back from said first upright position to said second upright position engaging and pivoting said first seat cushion support away from said seat cushion; and
a second seat cushion support (54) pivotally mounted to each seat riser adjacent said rearward end for engaging and supporting said seat cushion above said rearward end of said seat riser in said second inclined position (B) and disengaging said seat cushion for movement against said rearward end of said seat riser in response to movement of said seat back from said second upright position (B) to said first upright position engaging (4) and pivoting said second seat cushion support (54) away from said seat cushion, **characterized in that**
each of said seat risers (30, 32) includes opposing upper inclined support surfaces (48, 50) extending from respective opposite forward and rearward ends (44, 46) to a center peak for supporting said seat cushion in each of said respective first and second inclined positions (A, B).

2. A seat assembly (10) as set forth in claim 1 further including a latch mechanism (140) operatively coupled to said linkage mechanism (101) for engaging one said seat risers (30, 32) to releasably latch said seat cushion (12) in each of said inclined positions (A, B).

3. A seat assembly (10) as set forth in claim 2 wherein said linkage mechanism (101) includes a lower link (102) having a first end pivotally coupled to said hinge plate and a second end pivotally coupled to said seat back (14) for guiding said seat back between said first and second upright positions.

4. A seat assembly (10) as set forth in claim 3 wherein said linkage mechanism includes an upper link (106) generally parallel to said lower link (102) and having a first end pivotally coupled to said hinge plate and a second end pivotally coupled to said seat back.

5. A seat assembly (10) as set forth in claim (1) wherein said seat cushion (12) includes a tubular seat cushion support frame formed by a front tube (72) adjacent said forward end of said riser, a rear tube (74) adjacent said rearward end of said riser, and a pair of spaced apart inboard and outboard tubes (76, 78) generally parallel with said respective pair of seat risers and interconnecting said front and rear tubes (72, 74).

6. A seat assembly (10) as set forth in claim (5) wherein said seat back (14) includes tubular U-shaped seat back support frame (40) formed by spaced apart and parallel inboard and an outboard tubes (92, 94) interconnected by an upper cross tube.

7. A seat assembly (10) as set forth in claim 6 wherein each of said inboard and outboard tubes (92,94) includes a lower distal (98) end pivotally connected to and between said upper and lower links (103, 106).

8. A seat assembly (10) as set forth in claim (7) wherein said upper link (106) includes a first end pivotally connected to said hinge plate and a second distal end (112) forming a bulbous shaped plate portion projecting rearwardly of said seat back support frame in said upright position.

9. A seat assembly (10) as set forth in claim (8) wherein said bulbous shaped plate portion (112) includes a generally V-shaped slot (116) formed therein with the apex of the slot adjacent said distal end of said upper link.

10. A seat assembly (10) as set forth in claim (9) wherein said seat back includes an inner suspension support frame (118) operatively connected between said seat back support frame (40) and said upper link (106) for supporting an occupant of said seat assembly.

11. A seat assembly (10) as set forth in claim (10) wherein said inner suspension support frame (118) includes a pair of spaced apart, elongated and cylindrical support bars (120) extending parallel between said inboard and outboard tubes (92, 94) between first and second ends, said first ends adapted to mount a head restraint assembly (26) on said seat assembly.

12. A seat assembly (10) as set forth in claim (11) wherein said upper cross tube (100) of said seat back includes a pair of elongate slots (125) therethrough for receiving said first ends (122) of said inner suspension support bars (120) to allow the first ends to articulate forward and rearward of said upper cross tube.

13. A seat assembly (10) as set forth in claim (12) wherein said inner suspension support frame (118) further includes a cross bar (126) connected between said spaced apart second ends of said support bars, said cross bar having opposing distal ends slidably received within the V-shaped slots (116) formed in the bulbous portion (112) of said upper links.

14. A seat assembly (10) as set forth in claim (13) further including at least one biasing member (130) connected between said seat back support frame and said inner suspension support frame for biasing said cross bar into the apex of said V-shaped slot.

15. A seat assembly (10) as set forth in claim (14) wherein each of said seat cushion support (52, 54) includes a main plate (60) pivotally connected to said seat riser and biased for engagement with said seat cushion support frame.

16. A seat assembly (10) as set forth in claim (15) wherein each of said seat cushion support (52, 54) includes a push plate (62) extending outwardly from said main plate for engagement with said lower link (102) to release seat cushion support from engagement with said seat cushion support frame in response to select movement of said seat back (14) between said first and second upright postions (A,B).

17. A seat assembly (10) as set forth in claim (16) wherein said latch mechanism (140) includes a latch plate (142) pivotally connected to said lower link (102) and opposing forward and rearward hooks (143, 150) for engaging said seat riser to retain said seat cushion in each of said first and second inclined positions (A,B).

18. A seat assembly (10) as set forth in claim (17) wherein said latch mechanism (140) include a self centering spring (160) coupled between said latch plate (142) and said lower link (102) for centering said latch plate (142) in a center position when released from said seat riser.

19. A seat assembly (10) as set forth in claim (18) further includes a pivot rod extending through and between said seat risers for pivotally supporting said hinge plates (82, 84) on said seat riser and synchronizing said hinge plates during movement of said seat cushion (12) between said first and second inclined positions (A, B)

## Patentansprüche

1. Mehrfach positionierbare und umkehrbare Sitzanordnung (10) mit:
einem Paar von voneinander beabstandeten Sitzunterbandelementen (30, 32), die zur Anbringung der Sitzanordnung an einem Fahrzeugboden angepasst sind, wobei die Sitzunterbandelemente ein vorderes Ende (44) und ein entgegengesetztes hinteres Ende (46) umfassen,
einem Sitzpolster (12), das in Wirkverbindung zwischen den Sitzunterbandelementen (30, 32) gekoppelt und zwischen einer ersten geneigten Position (A) gegen das hintere Ende und einer zweiten geneigten Position (B) gegen das vordere Ende schwenkbar ist,
einer Sitzlehne (14), die in Wirkverbindung an die Sitzunterbandelemente gekoppelt und zwischen einer ersten aufrechten Position (A) nahe dem hinteren Ende und einer zweiten aufrechten Position (B) nahe dem vorderen Ende schwenkbar ist,
einem Gestängemechanismus (101), der die Sitzunterbandelemente jeweils mit dem Sitzpolster und der Sitzlehne verbindet, um das Sitzkissen zwischen der ersten geneigten Position und der zweiten geneigten Position in Reaktion auf die zwischen der ersten aufrechten Position und der zweiten aufrechten Position schwenkenden Sitzlehne zu schwenken,
einer Gelenkplatte (82, 84), die schwenkbar mit jedem der Sitzunterbandelemente und unbeweglich an den jeweiligen gegenüberliegenden Seiten des Sitzpolsters befestigt ist, um das Sitzpolster zwischen der ersten und der zweiten geneigten Position zu führen und zu stützen,
einer ersten Sitzpolsterstütze (52), die schwenkbar an jedes Sitzunterbandelement nahe dem vorderen Ende angebracht ist, um das Sitzpolster über dem vorderen Ende (44) des Sitzunterbandelements in der ersten geneigten Position (A) einzuklinken und zu stützen und das Sitzpolster für eine Bewegung gegen das vordere Ende der Sitzhaltevorrichtung in Reaktion auf eine Bewegung der Sitzlehne von der ersten aufrechten Position in die zweite aufrechte Position auszuklinken, wodurch die erste Sitzpolsterstütze eingeklinkt und von dem Sitzpolster weggeschwenkt wird, und
einer zweiten Sitzpolsterstütze (54), die schwenkbar an jedes Sitzunterbandelement nahe dem hinteren Ende angebracht ist, um das Sitzpolster über dem hinteren Ende der Sitzhaltevorrichtung in der zweiten geneigten Position (B) einzuklinken und zu stützen und das Sitzpolster für eine Bewegung gegen das hintere Ende der Sitzhaltevorrichtung in Reaktion auf eine Bewegung der Sitzlehne von der zweiten aufrechten Position (B) in die erste aufrechte Position auszuklinken, wodurch die zweite Sitzpolsterstütze (45) eingeklinkt (4) und von dem Sitzpolster weggeschwenkt wird, **dadurch gekennzeichnet, dass**
jedes der Sitzunterbandelemente (30, 32) entgegengesetzte, obere, geneigte Stützflächen (48, 50) umfasst, die sich von dem jeweiligen entgegengesetzten vorderen und hinteren Ende (44, 46) zu einer mittleren Spitze erstrecken, um das Sitzpolster in jeder der jeweiligen ersten und zweiten geneigten Positionen (A, B) zu stützen.

2. Sitzanordnung (10) nach Anspruch 1, die des weiteren einen Verriegelungsmechanismus (140) umfasst, der für ein Einklinken an einem der Sitzunterbandelemente (30,32) in Wirkverbindung an den Gestängemechanismus (101) gekoppelt ist, um das Sitzpolster (12) lösbar in der jeweiligen geneigten Position (A, B) zu verriegeln.

3. Sitzanordnung (10) nach Anspruch 2, wobei der Gestängemechanismus (101) eine untere Strebe (102) umfasst, die ein schwenkbar an die Gelenkplatte gekoppeltes erstes Ende und ein schwenkbar an die Sitzlehne (14) gekoppeltes zweites Ende aufweist, um die Sitzlehne zwischen der ersten und zweiten aufrechten Position zu führen.

4. Sitzanordnung (10) nach Anspruch 3, wobei der Gestängemechanismus eine obere Strebe (106) umfasst, die im wesentlichen parallel zu der unteren Strebe (102) verläuft und ein schwenkbar an die Gelenkplatte gekoppeltes erstes Ende und ein schwenkbar an die Sitzlehne gekoppeltes zweites Ende aufweist.

5. Sitzanordnung (10) nach Anspruch 1, wobei das Sitzpolster (12) einen Rohr-Sitzpolsterstützrahmen umfasst, der aus einem vorderen Rohr (72) nahe dem vorderen Ende der Haltevorrichtung, einem hinteren Rohr (74) nahe dem hinteren Ende der Haltevorrichtung und einem Paar von voneinander beabstandeten innenliegenden und außenliegenden Rohren (76, 78) gebildet wird, die im wesentlichen parallel mit dem jeweiligen Paar von Sitzunterbandelementen verlaufen und das vordere und hintere Rohr (72, 74) verbinden.

6. Sitzanordnung (10) nach Anspruch 5, wobei die Sitzlehne (14) einen U-förmigen Rohr-Sitzlehnenstützrahmen (40) umfasst, der von voneinander beabstandeten und parallel verlaufenden innenliegenden und außenliegenden Rohren (92, 94) gebildet wird, die mittels eines oberen Querrohres verbunden sind.

7. Sitzanordnung (10) nach Anspruch 6, wobei jedes der innenliegenden und außenliegenden Rohre (92, 94) ein unteres entferntes Ende (98) umfasst, das schwenkbar mit und zwischen der oberen und unteren Strebe (102, 106) verbunden ist.

8. Sitzanordnung (10) nach Anspruch 7, wobei die obere Strebe (106) ein schwenkbar mit der Gelenkplatte verbundenes erstes Ende und ein zweites entferntes Ende (112) umfasst, das einen wulstförmigen Plattenabschnitt bildet, der rückwärts gerichtet in der aufrechten Position aus dem Sitzlehnenstützrahmen auskragt.

9. Sitzanordnung (10) nach Anspruch 8, wobei der wulstförmige Plattenabschnitt (112) einen darin mit dem Scheitel des Schlitzes nahe dem entfernten Ende der oberen Strebe ausgebildeten, im wesentlichen V-förmigen Schlitz (116) umfasst.

10. Sitzanordnung (10) nach Anspruch 9, wobei die Sitzlehne einen inneren Aufhängungsstützrahmen (118) umfasst, der in Wirkverbindung zwischen dem Sitzlehnenstützrahmen (40) und der oberen Strebe (106) verbunden ist, um einen Nutzer der Sitzanordnung zu stützen bzw. zu tragen.

11. Sitzanordnung (10) nach Anspruch 10, wobei der innere Aufhängungsstützrahmen (118) ein Paar von voneinander beabstandeten, verlängerten und zylindrischen Stützstäben (120) umfasst, die sich parallel zwischen den innenliegenden und außenliegenden Rohren (92, 94) zwischen ersten und zweiten Enden erstrecken, wobei die ersten Enden ausgebildet sind, um eine Kopfstützenanordnung (26) auf der Sitzanordnung zu befestigen.

12. Sitzanordnung (10) nach Anspruch 11, wobei das obere Querrohr (100) der Sitzlehne ein Paar von sich durch dieses erstreckenden, verlängerten Schlitzen (125) zur Aufnahme der ersten Enden (122) der inneren Aufhängungsstützstäbe (120) umfasst, um den ersten Enden zu ermöglichen, bezüglich des oberen Querrohres nach vorn oder nach hinten zu klappen.

13. Sitzanordnung (10) nach Anspruch 12, wobei der innere Aufhängungsstützrahmen (118) des weiteren einen Querstab (126) umfasst, der zwischen den voneinander beabstandeten zweiten Enden der Stützstäbe verbunden ist, wobei der Querstab entgegengesetzte entfernte Enden aufweist, die verschiebbar in den V-förmigen Schlitzen (116) aufgenommen werden, die in den wulstförmigen Abschnitten (112) der oberen Streben ausgebildet sind.

14. Sitzanordnung (10) nach Anspruch 13, die des weiteren mindestens ein Spannelement (130) umfasst, das zwischen dem Sitzlehnenstützrahmen und dem inneren Aufhängungsstützrahmen verbunden ist, um den Querstab in dem Scheitel des V-förmigen Schlitzes vorzuspannen.

15. Sitzanordnung (10) nach Anspruch 14, wobei jede der Sitzpolsterstützen (52, 54) eine Hauptplatte (60) umfasst, die schwenkbar mit den Sitzunterbandelementen verbunden ist und für ein Einklinken in den Sitzpolsterstützrahmen vorgespannt ist.

16. Sitzanordnung (10) nach Anspruch 15, wobei jede der Sitzpolsterstützen (52, 54) eine sich von der Hauptplatte nach außen erstreckende Druckplatte (62) für ein Eingreifen an der unteren Strebe (102) umfasst, um die Sitzpolsterstütze aus dem Eingriff mit dem Sitzpolsterstützrahmen in Reaktion auf die gewählte Bewegung der Sitzlehne (14) zwischen der ersten und zweiten aufrechten Position (A, B) zu lösen.

17. Sitzanordnung (10) nach Anspruch 16, wobei der Verriegelungsmechanismus (140) eine Verriegelungsplatte (142) umfasst, die schwenkbar mit der unteren Strebe (102) und entgegengesetzten vorderen und hinteren Haken (148, 150) für ein Eingreifen an dem Sitzunterbandelement verbunden ist, um das Sitzpolster in jeder der ersten und zweiten geneigten Positionen (A, B) zu fixieren.

18. Sitzanordnung (10) nach Anspruch 17, wobei der Verriegelungsmechanismus (140) eine selbstzentrierende Feder (160) umfasst, die zwischen der Verriegelungsplatte (142) und der unteren Strebe (102) gekoppelt ist, um die Verriegelungsplatte (142) in einer Mittelposition zu zentrieren, wenn sie von dem Sitzunterbandelement gelöst wird.

19. Sitzanordnung (10) nach Anspruch 18, die des weiteren eine Schwenkstange umfasst, die sich durch und zwischen den Sitzunterbandelementen erstreckt, um schwenkbar die Gelenkplatten (82, 84) auf den Sitzunterbandelementen zu lagern und die Gelenkplatten während der Bewegung des Sitzkissens (12) zwischen der ersten und zweiten geneigten Position (A, B) zu synchronisieren.

## Revendications

1. Ensemble formant siège (10) à multiples positions et réversible, comprenant :
une paire de montants de sièges espacés (30, 32) adaptés pour monter ledit ensemble formant siège sur un plancher de véhicule, lesdits montants incluant une extrémité antérieure (44) et une extrémité postérieure opposée (46) ;
un coussin de siège (12) fonctionnellement couplé entre lesdits montants de sièges (30, 32) et capable de pivoter entre une première position inclinée (A) contre ladite extrémité postérieure et une seconde position inclinée (B) contre ladite extrémité antérieure ;
un dossier de siège (14) fonctionnellement couplé audits montants de sièges et capable de pivoter entre une première position dressée (A) adjacente à ladite extrémité postérieure et une seconde position dressée (B) adjacente à ladite extrémité antérieure ;
un mécanisme de tringlerie (101) qui interconnecte lesdits montants de sièges à chacun des éléments que sont le coussin de siège et le dossier de siège pour faire pivoter ledit coussin de siège entre ladite première position inclinée et ladite seconde position inclinée en réponse au pivotement dudit dossier de siège entre ladite première position dressée et ladite seconde position dressée ;
une plaque à charnière (82, 84) connectée en pivotement à chacun desdits montants de sièges et attachée de manière fixe sur des côtés opposés respectifs dudit coussin de siège pour guider et pour supporter ledit coussin de siège entre chacune parmi ladite première et ladite seconde position inclinée ;
un premier support de coussin de siège (52) monté en pivotement sur chaque montant de siège en position adjacente à ladite extrémité antérieure pour engager et supporter ledit coussin de siège au-dessus de ladite extrémité antérieure (44) dudit montant de siège dans ladite première position inclinée (A) et dégager ledit coussin de siège pour un mouvement contre ladite extrémité antérieure dudit montant de siège en réponse à un mouvement dudit dossier de siège depuis ladite première position dressée vers ladite seconde position dressée en engageant et en faisant pivoter ledit premier support de coussin de siège en éloignement dudit coussin de siège ; et
un second support de coussin de siège (54) monté en pivotement sur chaque montant de siège en position adjacente à ladite extrémité postérieure pour engager et supporter ledit coussin de siège au-dessus de ladite extrémité postérieure dudit montant de siège dans ladite seconde position inclinée (B) et dégager ledit coussin de siège pour un mouvement contre ladite extrémité postérieure dudit montant de siège en réponse à un mouvement dudit dossier de siège depuis ladite seconde position dressée (B) vers ladite première position dressée (4) en engageant et en faisant pivoter ledit second support de coussin de siège (54) en éloignement dudit coussin de siège, **caractérisé en ce que** :
chacun desdits montants de sièges (30, 32) inclut des surfaces de support inclinées supérieures opposées (48, 50) qui s'étendent depuis des extrémités respectives opposées avant et arrière (44, 46) jusqu'à une pointe centrale pour supporter ledit coussin de siège dans chacune des positions respectives parmi la première et la seconde position inclinée (A, B).

2. Ensemble formant siège (10) selon la revendication 1, incluant en outre un mécanisme de verrouillage (140) fonctionnellement couplé audit mécanisme à tringlerie (101) pour engager l'un desdits montants de sièges (30, 32) afin de verrouiller de façon libérable ledit coussin de siège (12) dans chacune desdites positions inclinées (A, B).

3. Ensemble formant siège (10) selon la revendication 2, dans lequel ledit mécanisme à tringlerie (101) inclut un bras inférieur (102) ayant une première extrémité couplée en pivotement à ladite plaque à charnière et une seconde extrémité couplée en pivotement audit dossier de siège (14) pour guider ledit dossier de siège entre ladite première et ladite seconde position dressée.

4. Ensemble formant siège (10) selon la revendication 3, dans lequel ledit mécanisme à tringlerie inclut un bras supérieur (106) généralement parallèle audit bras inférieur (102) et ayant une première extrémité couplée en pivotement à ladite plaque à charnière et une seconde extrémité couplée en pivotement audit dossier de siège.

5. Ensemble formant siège (10) selon la revendication 1, dans lequel ledit coussin de siège (12) inclut un cadre de support de coussin de siège tubulaire formé par un tube antérieur (72) adjacent à ladite extrémité antérieure dudit montant, par un tube postérieur (74) adjacent à ladite extrémité postérieure dudit montant, et par une paire de tubes intérieur et extérieur espacés (76, 78) généralement parallèles à ladite paire respective de montants de siège, et interconnectant lesdits tubes antérieur et postérieur (72, 74).

6. Ensemble formant siège (10) selon la revendication 5, dans lequel ledit dossier de siège (14) inclut un cadre de support (40) de dossier de siège tubulaire en forme de U, formé par des tubes intérieur et extérieur espacés et parallèles (92, 94) interconnectés par un tube transversal supérieur.

7. Ensemble formant siège (10) selon la revendication 6, dans lequel chacun desdits tubes intérieur et extérieur (92, 94) inclut une extrémité distale inférieure (98) connectée en pivotement auxdits bras supérieur et inférieur (102, 106) et entre ces derniers.

8. Ensemble formant siège (10) selon la revendication 7, dans lequel ledit bras supérieur (106) inclut une première extrémité connectée en pivotement à ladite plaque à charnière, et une seconde extrémité distale (112) formant une portion en plaque de forme bombée qui se projette vers l'arrière dudit cadre de support de dossier de siège dans ladite position dressée.

9. Ensemble formant siège (10) selon la revendication 8, dans lequel ladite portion en plaque de forme bombée (112) inclut une fente (116) généralement en forme de V, formée à l'intérieur de celle-ci, et de sorte que le sommet de la fente soit adjacent à ladite extrémité distale dudit bras supérieur.

10. Ensemble formant siège (10) selon la revendication 9, dans lequel ledit dossier de siège inclut un cadre de support de suspension intérieur (118) fonctionnellement connecté entre ledit cadre de support de dossier de siège (40) et ledit bras supérieur (106) pour supporter un occupant dudit ensemble formant siège.

11. Ensemble formant siège (10) selon la revendication 10, dans lequel ledit cadre de support de suspension intérieur (118) inclut une paire de barres de support espacées (120) allongées et cylindriques, qui s'étendent parallèlement entre ledit tube intérieur et ledit tube extérieur (91, 94) entre ladite première et ladite seconde extrémité, lesdites premières extrémités étant adaptées à monter un ensemble appui-tête (26) sur l'ensemble formant siège.

12. Ensemble formant siège (10) selon la revendication 11, dans lequel ledit tube transversal supérieur (100) dudit dossier de siège inclut une paire de fentes allongées (125) qui le traversent pour recevoir lesdites premières extrémités (122) desdites barres de support de suspension intérieures (120) et permettre aux extrémités libres de subir une articulation vers l'avant et vers l'arrière dudit tube transversal supérieur.

13. Ensemble formant siège (10) selon la revendication 12, dans lequel ledit cadre de support de suspension intérieur (112) inclut encore une barre transversale (126) connectée entre lesdites secondes extrémités espacées desdites barres de support, ladite barre transversale ayant des extrémités distales opposées reçues en coulissement à l'intérieur des fentes en forme de V (116) formées entre la partie bombée (112) desdits bras supérieurs.

14. Ensemble formant siège (10) selon la revendication 13, incluant en outre au moins un élément de sollicitation (130) connecté entre ledit cadre de support de dossier de siège et ledit cadre de support de suspension intérieur pour solliciter ladite barre transversale vers l'intérieur du sommet de ladite fente en forme de V.

15. Ensemble formant siège (10) selon la revendication 14, dans lequel chacun desdits supports de coussin de siège (52, 54) inclut une plaque principale (60) connectée en pivotement audit montant de siège et sollicitée pour venir en engagement avec ledit cadre de support de coussin de siège.

16. Ensemble formant siège (10) selon la revendication 15, dans lequel chacun desdits supports de coussin de siège (52, 54) inclut une plaque de poussée (62) qui s'étend vers l'extérieur depuis ladite plaque principale pour venir en engagement avec ledit bras inférieur (102) afin de relâcher le support de coussin de siège depuis l'engagement avec ledit cadre de support de coussin de siège en réponse à un mouvement de sélection dudit dossier de siège (14) entre ladite première et ladite seconde position dressée (A, B).

17. Ensemble formant siège (10) selon la revendication 16, dans lequel ledit mécanisme de verrouillage (140) inclut une plaque de verrouillage (142) connectée en pivotement audit bras inférieur (102), et des crochets opposés à l'avant et à l'arrière (148, 150) pour engager ledit montant de siège afin de retenir ledit coussin de siège dans chacune parmi ladite première et ladite seconde position inclinée (A, B).

18. Ensemble formant siège (10) selon la revendication (17), dans lequel ledit mécanisme de verrouillage (140) inclut un ressort auto-centreur (160) couplé entre ladite plaque de verrouillage (142) et ledit bras inférieur (102) pour centrer ladite plaque de verrouillage (142) dans une position centrée lorsqu'elle est relâchée par rapport audit montant de siège.

19. Ensemble formant siège (10) selon la revendication 18, incluant en outre une tige de pivot s'étendant à travers et entre lesdits montants de siège pour supporter en pivotement lesdites plaques d'articulation (82, 84) sur ledit montant de siège et synchroniser lesdites plaques à charnière pendant le mouvement dudit coussin de siège (12) entre ladite première et ladite seconde positions inclinées (A, B).
